# EUROPÄISCHE PATENTSCHRIFT

(11) **EP 3 627 137 B1**
(45) Veröffentlichungstag und Bekanntmachung des Hinweises auf die Patenterteilung: **17.04.2024**
(21) Anmeldenummer: 19192453.9
(22) Anmeldetag: 20.08.2019
(51) Int. Cl.: G01M 17/02

(54) **VORRICHTUNG ZUR KLASSIFIZIERUNG VON ALTREIFEN**
DEVICE FOR CLASSIFYING OLD TYRES
DISPOSITIF DE CLASSIFICATION DE PNEUS USAGÉS

(30) Priorität: 03.09.2018 DE 102018121435
(43) Veröffentlichungstag der Anmeldung: 25.03.2020
(73) Patentinhaber: TireTech GmbH, 86316 Friedberg (DE)
(72) Erfinder: Brain, Berhard, 86405 Meitingen (DE)
(74) Vertreter: Beder, Jens

(56) Entgegenhaltungen:
- WO-A1-2018/150256
- DE-A1-102008 023 936
- DE-A1-102013 010 402
- US-A- 3 789 226
- US-A1- 2014 270 466

## Beschreibung

Die Erfindung betrifft eine Vorrichtung zur automatisierten Klassifizierung von Altreifen auf Basis des erfassten Zustands und Alters, insbesondere um eine Sortierung von Altreifen hinsichtlich ihrer weiteren Nutzbarkeit zu ermöglichen. Zum Stand der Technik gehörende Dokumente sind die US 2014/270466 A1, WO 2018/150256 A1, DE 102013010402 A1, US 3789226 A und DE 102008023936 A1.

Bei der Entsorgung von Altreifen ist es üblich, dass die Altreifen einer Wiederverwertung zugeführt werden. Diese Wiederverwertung erfolgt derzeit in den meisten Fällen durch Recyceln der Materialen des Reifens. Allerdings gibt es auch die Möglichkeit, Altreifen hinsichtlich ihres Gebrauchszustands zu bewerten, so dass noch einsetzbare Reifen ohne den aufwändigen, energieintensiven und auch kostspieligen Recycelprozess wiedereingesetzt werden können. Das Wiederverwerten von Altreifen kann dabei in unterschiedlicher Form erfolgen: Einerseits kann ein Altreifen als Basis für eine Runderneuerung dienen, andererseits kann auch eine Weiterverwendung des gebrauchten Reifens erfolgen, wozu der Altreifen allerdings dem Handel erneut zugeführt werden muss. Altreifen liegen meist in unsortierter Form vor, so dass Reifen höchst unterschiedlichen Alters, Dimension/Größe und unterschiedlicher Abnutzungserscheinungen gemeinsam in einem Container einer Verwertungsstelle zugeführt werden. Dort muss dann personalaufwändig jeder Reifen einzeln durch einen Mitarbeiter inspiziert werden. Es ist leicht nachvollziehbar, dass die individuelle Bewertung damit unmittelbar von der Erfahrung des jeweils eingesetzten Personals abhängt, da bisher bei einer Bewertung keine reproduzierbaren Messergebnisse erzeugt werden. Wünschenswert wäre es jedoch, wenn eine objektive Erfassung des Zustands der Altreifen mit gleichbleibender Taktung möglich wäre, so dass auch bei der Wiederverwertung der Altreifen eine gleichbleibende Qualität gewährleistet und dokumentiert werden kann.

Es ist daher die Aufgabe der vorliegenden Erfindung, eine Vorrichtung zu schaffen, mit der eine gleichbleibend qualitativ hochwertige Erfassung des Zustands von Altreifen möglich wird, um eine effektivere Verwertung der zu entsorgenden Reifen zu ermöglichen. Ferner soll eine automatische Erfassung des Zustands mit hoher Taktung möglich werden.

Die Aufgabe wird durch die erfindungsgemäße Vorrichtung gelöst.

Mit der erfindungsgemäßen Vorrichtung ist es möglich, in einem automatisierten Prozess den Zustand von Altreifen zu erfassen und die Altreifen einer von wenigstens zwei verschiedenen Kategorien zuzuordnen. Dabei werden aufgrund einer optischen Erfassung des Reifens Bilddaten erzeugt, die in einer Recheneinheit ausgewertet und mit objektiven Kriterien verglichen werden können. Im Ergebnis wird somit jeder Altreifen mit gleichbleibenden Kriterien verglichen und die Bewertung des Zustands erfolgt in einer objektiven Weise verglichen mit der Bewertung durch Personal.

Die erfindungsgemäße Vorrichtung weist hierzu eine Transportvorrichtung zum Transport von vereinzelten Altreifen auf. Mit Hilfe dieser Transportvorrichtung werden einzeln und nacheinander die Altreifen zu dem eigentlichen Erfassungssystem geführt. Das Erfassungssystem ist ein optisches Erfassungssystem, welches eine Vorrichtung zur optischen Erfassung einer Lauffläche des Altreifens und beider Flanken aufweist. Damit kann nicht nur das Laufbild des Reifens aus den gewonnenen Bilddaten der Lauffläche ermittelt werden, sondern auch unmittelbar das Alter des Reifens durch Auswerten des auf einer Reifenflanke reliefartig vorhandenen Produktionsdatums erfolgen. Die Beurteilung des Alters des Reifens sowie seiner Beschädigungen und Abnutzung sind die Kriterien zur Bewertung, ob ein Reifen noch brauchbar ist oder nicht.

Problematisch bei der Erkennung des Produktionsdatums ist es, dass die sogenannte DOT-Nummer nicht wie die Dimension des Reifens auf beiden Seiten vorhanden ist. Da das Überschreiten eines maximalen Alters bereits alleine ein Ausschlusskriterium für die weitere Verwendung sein kann, muss sichergestellt werden, dass beide Reifenflanken ausgewertet werden. So kann sichergestellt werden, dass in jedem Fall Aufnahmen von der DOT-Nummer gemacht werden und das Alter in jedem Fall bestimmt werden kann. Ferner bietet sich so die Möglichkeit, redundant weitere Informationen, wie beispielsweise die Dimension des Reifens, zu erfassen. Häufig sind Reifenflanken während ihrer Nutzung durch Bordsteinkontakt beschädigt oder der Reifen ist verschmutzt, so dass nicht immer gewährleistet ist, dass die Dimension, sofern sie nur von einer Seite des Reifens ermittelt wird, zuverlässig erkannt wird. Durch die Erfassung auch der zweiten Flanke wird nun eine redundante Auswertung möglich, was die Erkennungssicherheit erhöht.

Die durch das optische Erfassungssystem einer Recheneinheit zugeführten Bilddaten werden dort verarbeitet. Basierend auf gewonnenen Information (zum Beispiel Datum/DOT, Profiltiefe, Gleichmäßigkeit der Abnutzung, Größe/Dimension) erfolgt dann beispielsweise durch Vergleich mit Grenzwerten die Zuordnung des jeweils optisch erfassten Altreifens zu einer von wenigstens zwei Kategorien. Im einfachsten Fall wird der Altreifen einer von zwei Kategorien zugeordnet, wobei lediglich danach unterschieden wird, ob ein Altreifen weiterverwendet werden kann, sei es als Basis für einen runderneuerten Reifen, eine sogenannte Karkasse, oder zum Verkauf als Gebrauchtreifen, oder der Altreifen dem Recycling zugeführt werden muss. Eine Zuordnung zur Kategorie "unbrauchbar" kann dabei zum Beispiel allein bei Überschreiten eines Höchstalters, ermittelt aus dem erkannten Produktionsdatum, erfolgen, aber auch bei Vorliegen eines Maßes für den Nutzungsgrad, das einen vorgegebenen Schwellwert überschreitet. Zur Beurteilung, ob ein Reifen noch brauchbar ist oder bereits unbrauchbar werden dabei immer beide Kriterien berücksichtigt: zwar kann grundsätzlich das Überschreiten eines Höchstalters oder das Erkennen von schwerwiegenden Beschädigungen zur Zuordnung des Altreifens in der Kategorie Anführungszeichen auf unbrauchbar Anführungszeichen zu führen, allerdings ist es auch möglich, dass der Reifen das zulässige Höchstalter noch nicht erreicht hat, allerdings Beschädigungen aufweist, die bei dem bereits erreichten Reifenalter eine Verwertung nicht sinnvoll erscheinen lassen. Die Zuordnung der Altreifen zu den Kategorien "brauchbar" und "unbrauchbar" kann zum Beispiel mittels einer Tabelle erfolgen, die in einem Speicher abgelegt ist, der mit der Recheneinheit verbunden ist. Dort wird zu jeder möglichen Kombination des Reifenalters mit dem ermittelten Maß für den Nutzungszustand eine der Kategorien festgelegt.

Es ist zu beachten, dass je nach Anwendungsfall selbstverständlich unterschiedliche Kategorien vorhanden sein können. Eine weitere, einfache Unterteilung ist beispielsweise aufgrund der Größe möglich, welche auf beiden Reifenflanken vorhanden ist. Diese weitere Unterteilung wird vorzugsweise nur für diejenigen Altreifen angewendet, bei denen eine Weiterverwendung möglich ist, die also primär der Kategorie "brauchbar" zugeordnet wurden. Die Auswertung der Bilder der Lauffläche und der Flanken gibt Aufschluss darüber, ob noch hinreichend Profiltiefe vorhanden ist, ob der Reifen gleichmäßig abgefahren ist und/oder ob Beschädigungen vorhanden sind und sich eine Weiterverwendung eines solchen Reifens wirtschaftlich lohnt. Beschädigungen der Karkasse sind z.B. wichtig zu erkennen, wenn eine Runderneuerung des Reifens durchgeführt werden soll.

Die erfindungsgemäße Vorrichtung hat den Vorteil, dass die Bewertung der Altreifen hinsichtlich Ihres Zustands und damit hinsichtlich Ihrer Weiterverwendbarkeit unabhängig von einer subjektiven Einschätzung eines Mitarbeiters erfolgt. Zum Ermitteln des Maßes für den Nutzungsgrad können zum Beispiel für einzelne Merkmale, wie verbleibende (durchschnittliche) Profiltiefe, Anzahl der identifizierten Beschädigungen, Größe der Beschädigungen, usw. jeweils einzelne Kennzahlen ermittelt werden, deren Gesamtheit mit einem vorbestimmten Vergleichskriterium verglichen wird. Zum Beispiel kann aus den ermittelten einzelnen Kennzahlen eine Summe gebildet werden, die mit einem Grenzwert verglichen wird. Dabei ist zum Beispiel die einzelne Kennzahl umso größer, je weniger sich in Bezug auf das entsprechende Merkmal eine Weiterverwendung lohnt. Die Verwendung solcher einzelnen Kennzahlen erlaubt es auch, unterschiedliche Merkmale unterschiedlich zu gewichten. Wird der Grenzwert durch die gebildete Summe überschritten, so lohnt sich eine Weiterverwertung wirtschaftlich nicht. Unabhängig von dem Vergleich des kumulierten Werts aus den einzelnen Kennzahlen können auch für die einzelnen Kennzahlen individuelle Grenzwerte festgelegt werden. So kann auch in dem Fall, dass eine einzelne Beschädigung gravierend ist eine Weiterverwendung ausgeschlossen werden, obwohl die übrigen einzelnen Kennzahlen eine solche sinnvoll erscheinen ließen.

Selbstverständlich sind auch andere Algorithmen denkbar, mit denen aus den Bilddaten Maß für den Nutzungszustand und eine Entscheidung hinsichtlich der Zuordnung zu einer Kategorie erfolgen kann.

Ein weiterer Vorteil der Vorrichtung ist eine Erhöhung der Taktung, denn das Aussortieren der Altreifen, welche nicht mehr brauchbar sind bzw. das Sortieren der noch nutzbaren Altreifen ist eine körperlich anstrengende Arbeit. Daher lässt bei Erfassung des Zustands und Sortierung mit Hilfe von Mitarbeitern zwangsläufig im Laufe einerSchicht bzw. täglichen Arbeitsdauer die Leistung nach. Dies erfordert den Einsatz von weiterem Personal, so dass z.B. abwechselnd der Zustand und die Sortierung der Reifen durchgeführt werden können. Mit Hilfe der erfindungsgemäßen Vorrichtung ist es nun möglich, eine automatisierte Sortierung der Reifen im Anschluss an die Zustandserfassung durchzuführen. Hierzu werden die bereits erwähnten Kategorien verwendet. Dabei kann insbesondere eine Sortierung hinsichtlich der Größe der Reifen erfolgen, aber auch innerhalb einer Dimension hinsichtlich des Alters, da von der Flanke auch das Produktionsdatum (DOT) ausgelesen wird.

Die Unteransprüche definieren vorteilhafte Weiterbildungen der erfindungsgemäßen Vorrichtung.

Insbesondere ist es vorteilhaft, wenn die optische Erfassungseinheit in einem Messraum angeordnet ist. Dieser Messraum umgibt die Transportvorrichtung, wobei in gegenüberliegenden Wänden Öffnungen in dem Messraum angeordnet sind, so dass mittels der Transportvorrichtung die Altreifen zugeführt und abtransportiert werden können. Der Messraum wird durch die zu erfassenden Altreifen also durchfahren. Somit durchläuft mit Hilfe des Transportsystems jeder Altreifen, dessen Zustand erfasst werden soll, einzeln den Messraum und wird in dem Messraum hinsichtlich seines Zustands erfasst und bewertet. Durch Verwendung eines solchen Messraums werden im Bereich des optischen Erfassungssystems gleichbleibende Lichtverhältnisse sichergestellt. Solche gleichbleibenden Lichtverhältnisse könnten beispielsweise durch Vorsehen von Beleuchtungseinrichtungen optimiert werden, die die optische Erfassung der Flanken sowie des Profils erleichtern. Gleichzeitig ist ein Schutz des optischen Erfassungssystems sowie der weiteren, nachfolgend noch erläuterten Elemente in dem Messraum gewährleistet. Für einen einfacheren Aufbau kann der Messraum auch nach unten offen, also wie eine Haube aufgebaut sein. Kommen Messverfahren zum Erzeugen eines Bilds der Lauffläche und der Flanken zum Einsatz, wie beispielsweise Lasertriangulation, so ist bevorzugt, wenn in dem Messraum keine weitere Lichtquelle vorhanden ist, die zu einer Verfälschung des Ergebnisses führen könnte. In diesem Fall hat die Verwendung des Messraums den Vorteil, dass die Umgebung der zu Lasertriangulation verwendeten Kameras dunkel ist und gleichzeitig eine aus Sicherheitsgründen erforderliche Abschirmung des durch die Kameras erzeugten Laserstrahl sichergestellt ist.

Weiter ist es vorteilhaft, wenn zumindest drei Kameras als optisches Erfassungssystem vorgesehen sind. Dabei können diese Kameras jeweils eine eigene Aufgabe erfüllen. Insbesondere ist eine Kamera zur optischen Erfassung der Lauffläche vorgesehen, während eine zweite und dritte Kamera auf die Flanken des Altreifens gerichtet ist. Die Kameras werden vorzugsweise direkt auf die Lauffläche bzw. eine Flanke des Altreifens gerichtet. Da den Kameras jeweils individuelle Aufgaben zugewiesen sind, können die optischen Eigenschaften sowie die Positionierung hinsichtlich der zu erfüllenden Aufgabe optimiert werden. Dies betrifft insbesondere den Winkel, mit dem die Kameras zu der Lauffläche bzw. zu den Flanken ausgerichtet sind. Unter Zuhilfenahme spezieller Beleuchtungsmittel, wie oben erwähnt, kann damit die optische Erfassung begünstigt werden. Das so erzeugte Bild bildet dann die Grundlage, um in der Recheneinheit ausgewertet zu werden. Als "Bild" im Sinne der Erfindung wird jede Visualisierung der Lauffläche bzw. der Flanken des Reifens bezeichnet, die es erlaubt, relative Höhen der visualisierten Flächen zu bestimmen. Im bevorzugten Fall ist das Bild dabei eine Abbildung, die jedem erfassten Bildpunkt der abgebildeten Fläche eine Entfernung von einem gemeinsamen Bezugspunkt (zum Beispiel die Bildebene in der Kamera) zuordnet so das aus dem Bild direkt Höhenunterschiede und so zum Beispiel eine Profiltiefe ermittelt werden können. Das "Bild" ist damit eine zweidimensionale Wiedergabe des Reliefs der Lauffläche bzw. der Reifenflanken. Diese Wiedergabe des Reliefs, zum Beispiel durch Zuordnung unterschiedlicher Farben zu den jeweils gemessenen Entfernungen, ist die Basis für die weitere Bildauswertung. Eine solche Auswertung bezieht sich bei der Verarbeitung der Bilddaten zur Lauffläche z.B. auf die Profiltiefe, Beschädigungen, Fremdkörper im Profil oder ungleichmäßige Abnutzungserscheinungen (Profiltiefenänderungen entlang des Umfangs oder über die Reifenbreite). Selbstverständlich kann eine Auswertung auch im Hinblick auf lediglich einen Teil dieser Aspekte oder andere Aspekte erfolgen. Bei der Auswertung des Bildes von der auf die Flanken gerichteten Kameras wird vorzugsweise neben dem Produktionsdatum zumindest auch die auf der Flanke angegebene Reifendimension ermittelt. Selbstverständlich können auch noch weitere Informationen erkannt werden, die auf der Flanke von Reifen vorhanden sind. So finden sich hier in der Regel Markenlogos, Modellbezeichnungen oder ähnliches.

Weiterhin ist es vorteilhaft, wenn der Abstand einer der weiteren Kameras zu der von dieser Kamera erfassten Flanke des Altreifens einstellbar ist. Mit einem solchen einstellbaren Position zur Einstellung des Abstands kann sichergestellt werden, dass die Kameras jeweils mit einem optimalen Fokus arbeiten. So kann sichergestellt werden, dass eine zuverlässige Erfassung der auf der Flanke des Altreifens vorhandene Information möglich ist, obwohl die zugeführten Altreifen hinsichtlich ihrer Breite variieren. Denn üblicherweise kommen die Altreifen in einem Container zu einer Wiederverwertungsanlage, wobei die Reifen im Container unsortiert sind.

Zum Schutz der bezüglich des Abstands einstellbaren Kamera ist es vorteilhaft, dass eine Aufhängung dieser Kamera über eine Einrichtung verfügt, die einer Gewichtskraft der Kamera entgegenwirkt und zumindest bei Systemabschaltung eine Verringerung des Abstands der Kamera von der Flanke verhindert oder diesen automatisch vergrößert. Um eine solche Kompensation des Gewichts der Kamera oder eine Vorspannung entgegen der Fallrichtung zu erreichen kann beispielsweise eine (Gas-)Feder oder ein Gegengewicht vorgesehen sein. Eine Systemabschaltung wird beispielsweise durch einen Not-Aus-Taster ausgelöst. Aber auch im Falle eines Wiederanfahrens der Anlage kann eine Sicherheitsstellung durch die Einrichtung zum Schutz der Kamera angefahren werden.

Um die Kamera im richtigen Abstand zur Flanke des Altreifens zu positionieren, ist es insbesondere vorteilhaft, wenn ein Lichtschrankensystem im Transportweg des Altreifens angeordnet ist. Somit kann die Position der weiteren Kamera bereits vor dem eigentlichen Messvorgang eingestellt werden. Zur sicheren Erfassung ist das Lichtschrankensystem dabei auf der Seite der Zuführung aber im Inneren des Meßraums angeordnet. Fehlauflösungen können so vermieden werden. Während der Zuführung des Altreifens zu dem Messraum wird mit Hilfe einer Mehrzahl von Lichtschranken eine ungefähre Breite des Reifens ermittelt und die Kamera dementsprechend bereits in Position gebracht, bevor die eigentliche Bilderfassung des Altreifens erfolgt. Dadurch lässt sich die Taktzeit optimal gestalten und durch die Positionierung der Kamera wird erreicht, dass das erzeugte Bild hinreichend scharf für eine Auswertung ist, was die Erfassungssicherheit verbessert. Eventuelle Fehler beim Messen, d.h. dem Erzeugen der Bilddaten, bzw. der darauf basierenden Auswertung dieser, werden so verhindert.

Die Anzahl der Lichtschranken legt gleichzeitig die Anzahl der einstellbaren Höhen für die Kamera fest. Es hat sich erwiesen, dass für das zuverlässige Erkennen der Informationen auf der Flanke von Reifen in Breiten, wie sie für PKWs zum Einsatz kommen, die Verwendung von drei Höhen ausreichend ist. Zwar ist damit die Einstellung der Kameraposition lediglich für drei Reifenbreiten optimal, allerdings sind auch breitere oder schmalere Reifen noch in einem Bereich, in dem die Tiefenschärfe der Kamera ausreichend ist, um eine Bestimmung der auf der Flanke vorhandenen Information zu ermöglichen. In diesem Zusammenhang ist auch zu beachten, dass mittels der die gegenüberliegende Flanke erfassenden Kamera ein Abgleich der Informationen erfolgen kann. D. h., Bildinformationen beider Flanken, die der Recheneinheit zugeführt wird kann miteinander verglichen werden. Die Erkennungsgenauigkeit kann somit erheblich verbessert werden. Dies ist insbesondere für Altreifen wichtig, da durch den Gebrauch des Reifens wie oben bereits ausgeführt oftmals die Flanken des Altreifens beschädigt sind.

Um eine weitgehend automatisierte Bearbeitung zu ermöglichen, ist es vorgesehen, den Transport der Altreifen liegend zu bewirken. Das heißt, dass vorzugsweise mit Hilfe von einer Mehrzahl von angetriebenen Transportwalzen die Altreifen liegend zu dem optischen Erfassungssystem hin und nach Durchführung der Messung wieder abtransportiert werden. Ein solcher, liegender Transport vereinfacht das Vereinzeln der in einem Container im Grunde als Schüttgut angelieferten Altreifen erheblich und stabilisiert damit den Prozess/den Ablauf. Außerdem kann damit eine der beiden Kameras, die auf die Flanken des Altreifens gerichtet sind, fest montiert werden. Zumindest eine der beiden Flanken des Reifens hat aufgrund des liegenden Transports immer dieselbe Höhenlage. Die Kamera wird so montiert, dass die Flanke des Reifens ideal bezüglich des Fokus der Kamera liegt.

Während der Erfassung mittels des optischen Erfassungssystems sind die Reifen daher so angeordnet, dass eine Flanke, nämlich die von den Transportwalzen abgewandte Flanke, frei zugänglich ist. Wie es oben bereits erläutert wurde, ist es bevorzugt, dass das Bild der vermessenen bzw. aufgenommenen Fläche (Reifenflanke, Lauffläche (= Profil)) unmittelbar die Information bezüglich relativer Höhen der erfassten Punkte der aufgenommenen Fläche enthält. Das bevorzugte Verfahren, um die relativen Höhen der aufgenommenen Flächen zu messen, ist Lasertriangulation. In diesem Fall ist es erforderlich, alle Kameras des optischen Erfassungssystems direkt auf die Reifenflanken und die Lauffläche zu richten. Eine etwa unter dem transportierten Reifen angeordnete Kamera ist damit herabfallendem Schmutz ausgesetzt, wodurch die Messgenauigkeit signifikant verschlechtert werden kann. Für eine wirtschaftlich gute Nutzbarkeit ist es aber wichtig, dass die Anlage zwischendurch nicht durch etwa erforderliche Reinigung der Kameraoptiken stillsteht. Für eine unter der Transportebene und direkt auf den Reifen gerichtete Kamera ist es daher vorteilhaft, eine Luftströmung zu erzeugen, welche herabfallenden Schmutz seitlich ablenkt, sodass diese nicht auf der Kameraoptik zu liegen kommt. Eine solche Luftströmung kann insbesondere mithilfe einer Flachdüse erzeugt werden, wobei es besonders bevorzugt ist, eine laminare Strömung zu erzeugen.

Wie schon geschrieben, ist oberhalb des liegend auf der Transportvorrichtung transportierten Reifens eine einfache Positionierung der optischen Erfassungseinrichtung, nämlich der Kamera, möglich. Zwar ist es wie beschrieben bevorzugt, dass zwischen den Transportwalzen hindurch eine optische Erfassung direkt durch die unterhalb des Reifens angeordnete Kamera erfolgt. Grundsätzlich ist es auch denkbar, ein anderes Bildgebungsverfahren zu verwenden und die Höheninformation bezüglich der abgebildeten Flächen auf andere Weise als mit dem Lasertriangulation-Verfahren zu ermitteln. Beispielsweise könnten Stereokameras eingesetzt werden. In diesen Fällen kann es vorgesehen sein, die Erfassung der zweiten Flanke, die den Transportwalzen zugewandt ist, mit Hilfe eines oder mehrerer Spiegel durchzuführen. Ein solcher Spiegel ist beispielsweise unter 45 Grad zu der Ebene der Transportwalzen geneigt angeordnet, sodass die optische Achse der separaten Kamera parallel zur Ebene der Transportwalzen verläuft. Die Kamera selbst ist somit nicht mehr direkt auf die Reifenflanke gerichtet und kann beispielsweise durch ein Gehäuse oder eine Art Dach vor herabfallendem Schmutz geschützt werden. Durch die geneigte Anordnung des Spiegels bleibt andererseits wenig Verschmutzung auf dem Spiegel selbst liegen.

Weiterhin ist es möglich, ein automatisiertes Reinigungssystem für den Spiegel vorzusehen. Ein solches Reinigungssystem könnte beispielsweise in einem Vibrationsaktuator realisiert sein, durch den Verschmutzungen von der Spiegeloberfläche gelöst werden. Als weitere Reinigungssysteme sind Hochdrucksprühanlagen sowie Luftdruckanlagen, die beispielsweise trockene Verschmutzungen mittels Druckluft entfernen denkbar. Selbstverständlich ist auch eine Kombination verschiedener dieser Systeme möglich, insbesondere auch mit der oben bereits angegebenen laminaren Strömung, um ein Absetzen von Schmutz von vornherein zu unterbinden. Um möglichen Beschädigungen vorzubeugen, wird bevorzugt eine polierte Metallfläche als Spiegel eingesetzt.

Um eine stets gleichbleibende Position der Lauffläche des Altreifens sowie der Flanken des Altreifens relativ zu den verwendeten Kameras sicherzustellen, wird bevorzugt eine Zentriervorrichtung eingesetzt. Diese Zentriervorrichtung weist wenigstens drei Positionselemente auf, deren Abstand zueinander einstellbar ist. Diese Positionierelemente sind hinsichtlich ihres Abstandes zueinander einstellbar. Durch die Einstellung des Abstandes der Positionierelemente zueinander wird der Altreifen zwischen den Positionierelementen eingeklemmt. Zwar ist die Minimalanzahl der Positionierelemente drei, bevorzugt wird jedoch ein viertes Positionierelement eingesetzt. Die Positionierelemente können dann symmetrisch zur eigentlichen Transportrichtung angeordnet sein, sodass gleiche Verfahrwege senkrecht zur Transportrichtung eine Zentrierung der Altreifenachse unabhängig vom Durchmesser des Altreifens bewirkt.

Weiterhin ist es vorteilhaft, wenn die Zentriervorrichtung gleichzeitig die Antriebsvorrichtung zur erzeugende Rotation des Altreifens bildet. Dies wird insbesondere dadurch erreicht, dass zumindest eines der Positionierelemente zur Erzeugung der Drehbewegung eine angetriebene Rolle ist. Sind dagegen die anderen Positionierelemente frei drehbare Rollen, so kann eine Rotation des Altreifens um seine Reifenachse durchgeführt werden. Damit kann die oberhalb des Reifens vorgesehene Kamera, abgesehen von ihrer Höhenverstellbarkeit, ortsfest angeordnet werden. Insbesondere ist es vorteilhaft, wenn die Kameras ortsfest zu den Positionierelementen angeordnet sind, sodass zumindest im Falle der Kamera, welche die Lauffläche erfasst, aber auch bei der separaten Kamera, automatisch ein gleichbleibender Abstand von der Lauffläche, bzw. der Reifenflanke, gewährleistet ist. In diesem Fall verfährt die Kamera zur Erfassung der Lauffläche bei der Zentrierung des Altreifens gemeinsam mit wenigstens einem der Positionierelemente.

Besonders vorteilhaft ist es, wenn eine Hebevorrichtung vorgesehen ist, mit der der zugeführte Altreifen von den Transportwalzen oder allgemeiner der Transportvorrichtung abgehoben werden kann. Damit wird erreicht, dass die Transportwalzen kontinuierlich betrieben werden oder generell der Transport des Altreifens kontinuierlich erfolgt. Eine Taktung der Transportvorrichtung, um den Altreifen während der optischen Erfassung anzuhalten, ist damit nicht zwingend erforderlich. Stattdessen wird mittels der Hebevorrichtung der Altreifen aus der Transportebene herausgehoben, um in dieser Position die Messung durchzuführen. Dabei kann insbesondere die Hebevorrichtung wieder abgesenkt werden, wenn der Reifen durch die Positionierelemente geklemmt ist und gedreht wird oder in Form einer Kugelplatte als eine Art Kugellager für den Altreifen ausgebildet sein, sodass eine leichte Drehung des Altreifens mit Hilfe der Antriebsvorrichtung möglich ist.

Insbesondere ist auch eine Steuervorrichtung vorgesehen, welche die Hebevorrichtung so ansteuert, dass ein Weitertransport des Altreifens, indem die Hebevorrichtung den Altreifen wieder auf die Transportwalzen absenkt, erst nach erfolgter optischer Erfassung erfolgt. Das Signal zum Absenken der Hebevorrichtung kann dabei insbesondere auf Basis einer Information über die erfolgreiche Erfassung der gesuchten Informationen aus den Bilddaten der Reifenflanke/(n) oder aber nach Zeitablauf erzeugt werden. Damit wird sichergestellt, dass auch im Falle eines Nichterkennens der Information auf den Reifenflanken, beispielsweise aufgrund von Verschmutzung oder Beschädigung eine Mindesttaktzeit eingehalten wird. Eine Hebevorrichtung im Sinne der Erfindung ist jede Vorrichtung, die eine Relativbewegung senkrecht zu den Drehachsen der Transportwalzen ermöglicht. Insbesondere kann die Hebevorrichtung also auch eine Funktion des Absenkens der Förderrollen realisieren. In diesem Fall wäre eine beispielsweise eine Kugelplatte oder vergleichbare Einrichtung, die ein freies Drehen des Reifens ermöglicht, ortsfest, während die Transportvorrichtung zumindest in diesem Abschnitt absenkbar ist. Damit wäre der Reifen während des Messens ebenfalls frei drehbar.

Weiterhin ist vorzugsweise die Steuervorrichtung so eingerichtet, dass die Hebevorrichtung so angesteuert wird, dass durch die Antriebsvorrichtung vor dem Weitertransport des Altreifens eine Mindestanzahl von vollständigen Altreifendrehungen durchgeführt wird. Die kleinstmögliche Anzahl von Drehung kann dabei 1 sein. Damit wird sichergestellt, dass die gesamte Lauffläche und die Flanken einmal erfasst werden und in einem bzw. jeweils einem Bild dargestellt werden können. Beschädigungen, die in einem nicht erfassten Bereich der Lauffläche vorliegen, können somit faktisch nahezu ausgeschlossen werden. Zur Verbesserung der Erkennungssicherheit kann allerdings vorgesehen sein, dass der Altreifen wenigstens mindestens zwei oder vorzugsweise drei vollständige Umdrehungen macht. Da die Zeit, die hierzu benötigt wird, von der Dimension bzw. dem Durchmesser des Altreifens abhängt, kann in einem einfachen Fall die Mindestdauer, für die ein Altreifen gedreht wird, anhand des größtmöglichen erfassbaren Reifendurchmesser gewählt werden.

Die Recheneinheit, in der die Bilddaten ausgewertet werden, ist insbesondere so eingerichtet, dass zur Ermittlung des Zustands des Altreifens wenigstens eine Reifendimension, ein Reifentyp und/oder ein Reifenhersteller zusätzlich zu dem Produktionsdatum aus den Bildern der Reifenflanken ermittelt wird. Hierzu können unterschiedliche Kategorien vorgesehen sein, wobei jeder der Reifen einer solchen Kategorie zugeordnet wird. Nach dem Abtransport des Reifens von der Erfassungsvorrichtung weg kann dann anhand dieser Kategorien eine automatische Sortierung der Altreifen erfolgen. Abgesehen von einer solchen Sortierung, die unmittelbar auf Basis einer jeden Bewertung, die für den Altreifen erfolgt, durchgeführt werden kann, ist es auch möglich, eine statistische Auswertung der sortierten Reifen durchzuführen. Hierzu werden die Bewertungen (einzelnen Kennzahlen), aber auch die Einzelinformationen wie Reifendimension, Produktionsdatum, Reifenhersteller und Handelsbezeichnung, und/oder Informationen bzgl. des Laufflächenbildes (= Profil) in einem Speicher der Recheneinheit gespeichert. Durch diesen Eintrag in einem Speicher der Recheneinheit wird sozusagen ein "Fingerabdruck" für jeden vermessenen Reifen erzeugt. Solch ein "Fingerabdruck" kann auch dazu verwendet werden, zu erkennen, wenn ein und derselbe Reifen wiederholt der Vorrichtung zugeführt wird. Solch eine Erkennung kann hilfreich sein um Betrug vorzubeugen, wenn die statistische Auswertung der erfassten Altreifen dazu verwendet wird einen Nachweis zu führen, wie viele Altreifen korrekt der Entsorgung zugeführt wurden.

Bevorzugt weist die Recheneinheit also einen Speicher auf, in dem für jeden erfassten Altreifen ein Datensatz gespeichert wird, der eine zumindest aus den Bilddaten der Lauffläche abgeleitete charakteristische Information umfasst. Hierzu kann jede Form von charakteristischen Informationen, die sich aus den Bilddaten ableiten lässt verwendet werden, im einfachsten Fall sind dies die Bilddaten selbst. Allerdings ist die Verwendung der Bilddaten selbst relativ speicherintensiv und eine Komprimierung wird daher bevorzugt. Wichtig ist dabei nur, dass eine hohe Wiedererkennungsrate auf Basis dieser charakteristischen Informationen möglich ist.

Es kann ferner vorgesehen sein, dass ein einmal erfasster Reifen als erfasst und somit ordnungsgemäß verwertet gekennzeichnet wird. Hierzu kann insbesondere am Ende des Meßraums auch eine Markierung angebracht werden. Solche Markierungen können insbesondere in Form von Aufklebern oder farbigen Markierungen angebracht werden, denkbar sind allerdings auch Laserbeschriftungen, Gravuren, etc. Bevorzugt wird zum Anbringen einer Farbmarkierung eine Farbe verwendet, welche bei normalen Lichtverhältnissen unsichtbar (oder kaum sichtbar) ist und zum Beispiel erst in UV-Licht sichtbar wird. Gleichteilig wird mit solch einer Markierung oder auch den gespeicherten charakteristischen Informationen, verhindert, dass derselbe Altreifen mehrfach einer Erfassung zugeführt wird und damit fälschlicherweise die Rückführung einer großen Zahl von Altreifen vorspiegelt.

Weitere Aspekte und Vorteile der erfindungsgemäßen Vorrichtung werden nachfolgend im Detail erläutert. Hierzu ist exemplarisch eine vereinfachte Vorrichtung gemäß der Erfindung in den Zeichnungen dargestellt, in denen
Fig. 1 eine Seitenansicht der erfindungsgemäßen Vorrichtung zeigt; und
Fig. 2 eine Draufsicht auf eine Vorrichtung gemäß der Erfindung zeigt.

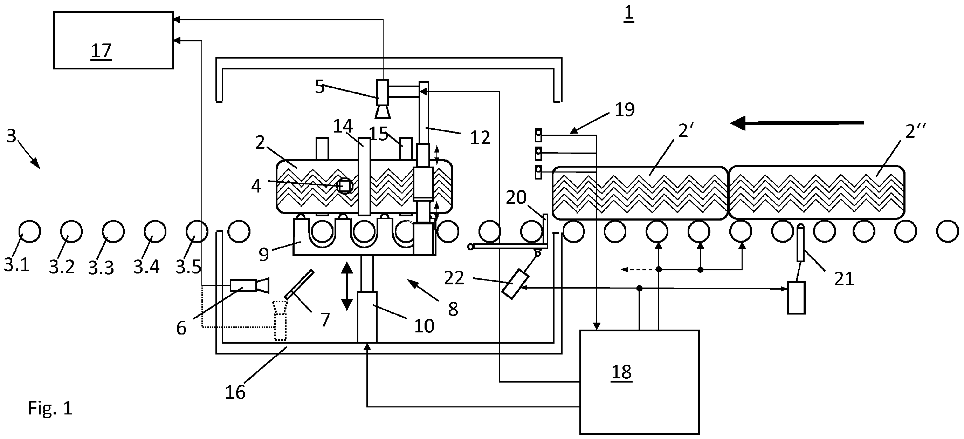

Bevor im Einzelnen auf die Elemente und Baugruppen der erfindungsgemäßen Vorrichtung zur Erfassung des Zustands von Altreifen eingegangen wird, soll zunächst angemerkt werden, dass die Zeichnungen lediglich schematischen Charakter haben. Insbesondere sind sie nicht als Konstruktionszeichnungen zu verstehen. Sie dienen lediglich der Erläuterung des Prinzips der Vorrichtung und der Erläuterung der Durchführung des entsprechenden Verfahrens. So wird auf konstruktiv erforderliche Elemente nicht im Einzelnen angegangen, sofern diese nicht explizit zur Erläuterung der Erfindung sinnvoll erscheinen. Der Ablauf des Verfahrens zur Erfassung des Zustands und Kategorisierung von Altreifen wird ebenfalls anhand der Figur 1 und einem damit erläuterten Ablauf von der Zuführung eines Altreifens bis hin zur Sortierung erläutert.

Eine Seitenansicht der erfindungsgemäßen Vorrichtung 1 ist in der Figur 1 dargestellt. Wie an dem Pfeil im rechten Teil der Figur 1 zu erkennen ist, wird die Vorrichtung in der Figur 1 von rechts nach links durchlaufen. In der dargestellten Situation befindet sich ein Altreifen 2 in einer Position, in der eine optische Erfassung seiner beiden Flanken sowie der Lauffläche möglich ist. Hierzu wurde der Altreifen 2 durch eine Transportvorrichtung 3 soweit transportiert, dass mit Hilfe von Kameras 4, 5 und 6 die Erfassung sowohl seiner Lauffläche als auch beider Flanken möglich ist. Die Kamera 4 und die weiteren Kameras 5, 6 bilden gemeinsam ein optisches Erfassungssystem. Das optische Erfassungssystem macht von der Lauffläche sowie beiden Flanken des Reifens Bilder in Form von Höhenprofilen, wozu der Reifen in nachfolgend noch zu beschreibender Weise relativ zur Position der drei Kameras 4, 5 und 6 gedreht wird. Damit werden sämtliche Bereiche der Flanken sowie der Lauffläche optisch erfasst.

Das von den Kameras 4, 5 und 6 jeweils erzeugte Bild in Form eines Höhenprofils wird vorzugsweise mittels Lasertriangulation erzeugt. Dazu wird die Oberfläche des Altreifens 2 mithilfe eines in jeder der Kamera erzeugten Lasers abgetastet. Letztlich ist in dem Bild jede Distanz zu der Kamera eine bestimmte Farbe zur Darstellung zugeordnet. Die reliefartige Struktur der jeweils abgetasteten Oberfläche wird damit in Form eines farbigen Bilds wiedergegeben.

Um eine sichere Erkennung der Profiltiefe für beliebige Profile zu ermöglichen, steht die optische Achse zumindest der Kamera 4 nicht senkrecht auf der abzubilden Fläche des Altreifens 2 sondern ist um einen Winkel von bis zu 15°, bevorzugt etwa 5°, aus dieser Senkrechten geneigt. Das Ermitteln der Profiltiefe bei Profilen, die keine in Umfangsrichtung des Altreifens 2 verlaufende Längsrille aufweisen, wird damit erheblich verbessert. So können aufgrund der Neigung der optischen Achse beliebige Reifenprofile vermessen werden. Dies ist insbesondere deswegen wichtig, da bei der Erfassung von Altreifen im Gegensatz zur Verarbeitung von Neureifen nicht vorher bereits festliegt, welches Profil zu erkennen ist.

Die Verwendung der Lasertriangulation ist ebenfalls insbesondere dann vorteilhaft, wenn gebrauchte Reifen vermessen bzw. kategorisiert werden sollen. Anders als bei Neureifen können hier Verschmutzungen ein erhebliches Problem darstellen. Da durch die Lasertriangulation ein Höhenprofil des Reliefs bzw. des Profils der jeweils erfassten Fläche erstellt wird, spielen Verschmutzungen, sofern sie nicht in der Höhe auftragen, bei der Erkennung von Mustern, Schriften, Profilen, Profiltiefen, usw. nur eine untergeordnete Rolle. Insbesondere sind auch nasse Oberflächen mittels der Lasertriangulation eindeutig abzutasten. Die Reflexionen, die ansonsten eine optische Auswertung unmöglich machen könnten, beeinflussen das Ergebnis der Lasertriangulation praktisch nicht.

Es ist zu beachten, dass im einfachsten Fall auch lediglich eine Kamera als optisches Erfassungssystem verwendet werden könnte. Sollen dennoch Informationen von beiden Reifenflanken und der Lauffläche verarbeitet werden, könnte die optische Erfassung der beiden Flanken über ein Spiegelsystem erfolgen und nur die Lauffläche direkt erfasst werden. Allerdings ist es bei einem solchen System nachteilig, dass durch den größeren Erfassungsbereich der dann einzigen Kamera, optische Verzerrungen im Randbereich des erzeugten Bildes auftreten können. Ebenso ist es schwieriger, sämtliche Bildinformation, die schließlich ausgewertet werden soll, ausreichend scharf abzubilden. Selbstverständlich könnte auch eine Kamera für die Lauffläche und nur eine zusätzliche Kamera für beide Flanken verwendet werden. Werden nicht verschiedene Kameras für die Lauffläche und die beiden Flanken eingesetzt, könnten bei der Bildverarbeitung mehrere Bereiche des erzeugten Bildes (der erzeugten Bilder) unabhängig voneinander bearbeitet werden. Ferner ist ein System, welches Spiegel verwendet, ungeeignet, um mittels der Lasertriangulation Höhenprofile zu erstellen.

Die Transportvorrichtung 3 weist eine Mehrzahl von Transportwalzen 3.1, 3.2, 3.3, 3.4, 3.5, ... auf. Der besseren Übersichtlichkeit wegen sind in Figur 1 lediglich ein Teil der Transportwalzen mit Referenzzeichen versehen. Es ist zu beachten, dass nicht sämtliche Transportwalzen 3.1, 3.2, ... angetrieben sein müssen. Es ist auch denkbar, dass ein Teil der Transportwalzen als frei drehbare Walzen vorgesehen sind. Insbesondere kann im Bereich vor oder nach der optischen Erfassung, also zur Zuführung bzw. beim Abtransport des Altreifens 2 durch ein Gefälle auf freilaufenden Rollen der Weitertransport des Altreifens 2 erfolgen. Dies liegt allerdings außerhalb der im Bild gezeigten erfindungsgemäßen Vorrichtung 1.

Auf der Zuführseite kann dann das einzelne Zuführen eines Altreifens 2 durch eine Rückhaltevorrichtung bewirkt werden. Die Rückhaltevorrichtung kann zum Beispiel mit eine zwischen den Walzen Stopperklappe 20 (oder einer anderen Barriere) und einem Dorn 21 ausgebildet sein. Die Stopperklappe 20 und der Dorn 21 sind jeweils mittels eines Aktuators hinsichtlich ihrer Höhe in Bezug auf die Transportebene verstellbar. Damit kann sowohl die Stopperklappe 20 als auch der Dorn 21 zwischen den Transportwalzen hindurch in den Transportweg des Altreifens 2 gebracht werden. Die Aktuatoren die Stopperklappe 20 und des Dorns 21 werden dabei von einer Steuervorrichtung 18 wechselweise angesteuert. D. h., dass immer entweder die Stopperklappe 20 oder der Dorn 21 über die Transportebene hinausragen und so einen Altreifen 2 beim Weitertransport hindern. Dabei ist der Abstand zwischen der Stopperklappe 20 und dem Dorn 21 in Transportrichtung so gewählt, dass bei einem an der Stopperklappe 20 anliegenden Altreifen 2' der Dorn 21 innerhalb des Wulsts des nachfolgenden Altreifens 2" ist. Der genaue Abstand wird dabei über den kleinsten zu verarbeitenden Durchmesser der Altreifen festgelegt. Wird die Anlage lediglich für Pkw Reifen ausgelegt, so sind die auftretenden Durchmesserunterschiede so klein, dass bei Orientierung an dem kleinsten zu erwartenden Durchmesser der Altreifen 2, 2', 2" gewährleistet ist, dass bei allen möglichen Größenkombinationen der Dorn 21 sicher in den nachfolgend von der Transportvorrichtung 3 geförderten Altreifen eingreift und diesen damit an seinem Wulst am Weitertransport hindern.

Das wechselweise Heben und Senken der Stopperklappe 20 sowie des Dorns 21 wird durch die Steuervorrichtung 18 gesteuert. Diese wertet hierzu Informationen von einem Lichtschrankensystem 19 aus, welches im Inneren des Messraums vorzugsweise direkt im Zuführbereich angeordnet ist. Abhängig von der Breite des Altreifens 2 löst der dem Messraum zugeführte Altreifen 2 eine oder mehrere Lichtschranken des Lichtschrankensystems 19 aus. Für die Ansteuerung der Rückhaltevorrichtung wird allerdings nur das Signal der untersten Lichtschranke benötigt, die hinsichtlich ihrer Höhe über der Transportvorrichtung 3 so angeordnet ist, dass sie auch bei den schmalsten zu verarbeitenden Reifen beim Zuführen des Altreifens 2 in den Messraum ausgelöst wird.

In der Ausgangssituation ist die Stopperklappe 20 in der in der Figur 1 gezeigten, oberen Position angeordnet. In dieser Position verhindert die Stopperklappe 20, dass der weitere Altreifen 2' von der Transportvorrichtung 3 in den Messraum gefördert werden kann. Wie es in der Figur 1 gezeigt ist, ist die Stopperklappe 20 in einer Seitenansicht etwa L-förmig ausgebildet. Der Drehpunkt am Ende des langen Schenkels ist dabei so gewählt, dass ein an der Stopperklappe 20 anliegender und somit Kraft in Transportrichtung ausübender Altreifen 2 die Stopperklappe 20 in ihrer den Transportweg blockierenden Position hält. Nach Abschluss des Erfassungsvorgangs des Altreifens 2, der sich im Bereich zur Erfassung durch die Kameras 4, 5, 6 befindet, wird der kurze Schenkel der Stopperklappe 20 mittels eines pneumatisch betätigten Aktuators 22 zwischen den Transportwalzen nach unten bewegt und die Transportvorrichtung 3 transportiert den nächsten Altreifen 2' in den Messraum. Gleichzeitig mit der versenkenden Bewegung der Stopperklappe 20 wird der Dorn 21 in seine obere Position gebracht, wodurch er innerhalb des nächsten Reifens zwischen den Transportwalzen hindurch herausragt. Ist die Stopperklappe 20 vollständig versenkt, so kann der nächste Altreifen 2' darüber hinweg in den Messraum gefördert werden. Gleichzeitig bleibt jedoch der nachfolgende Altreifen mit seinem Wulst an dem Dorn 21 hängen. Durch das Auslösen der untersten Lichtschranke des Lichtschrankensystems 19 kann genau festgestellt werden, wann der Altreifen 2` vollständig in den Messraum gefördert wurde. Endet die Unterbrechung der untersten Lichtschranke des Lichtschrankensystems 19 wird daher wiederum sowohl der Aktuator der Stopperklappe 20 als auch der des Dorns 21 betätigt, so dass die Stopperklappe 20 wieder angehoben wird und gleichzeitig der Dorn 21 abgesenkt wird. Damit hält wird der Dorn 21 der nachfolgenden Altreifen nicht länger auf und dieser wird bis zur Anlage an der Stopperklappe 20 weitertransportiert.

Weiterhin ist im Anschluss an den in der Figur 1 gezeigten erfindungsgemäßen Ausschnitt der gesamten Vorrichtung eine Sortierung in an sich bekannter Weise möglich. Die Sortierung erfolgt dabei auf Basis der Kategorien, denen der jeweilige Reifen auf Basis der erkannten Informationen zugeordnet wurde. Die Zuordnung der Altreifen zu den jeweiligen Kategorien wird nachfolgend im Einzelnen noch erläutert.

Wie in der Figur 1 zu erkennen ist, sind die Kamera 4 sowie die weitere Kamera 5 zur direkten optischen Erfassung der Lauffläche bzw. der von der Transportvorrichtung 3 abgewandten Flanke des Altreifens 2 angeordnet. Das heißt, die Optiken der jeweiligen Kamera sind direkt auf den Altreifen 2 gerichtet. Die Kamera 6 hingegen erfasst die der Transportvorrichtung 3 zugewandte Flanke des Altreifens 2 und muss daher Sicht auf diejenige Flanke des Altreifens 2 bekommen, die nach unten gerichtet ist. Um zu vermeiden, dass die unterhalb der Transportebene angeordnete Kamera 6 durch herabfallenden Schmutz beeinträchtigt oder gar beschädigt wird, kann mittels eines Spiegels 7 ein Bild der zweiten Flanke des Altreifens 2 indirekt erzeugt werden. Der Spiegel 7 kann dann beispielsweise als polierte Metallfläche ausgebildet sein. Im dargestellten Ausführungsbeispiel ist die optische Achse der Kamera 6 parallel zur Transportebene, die durch die Transportvorrichtung 3 definiert wird. Der Spiegel 7 ist dann in einem Winkel von 45 Grad zur optischen Achse der Kamera 6 angeordnet. Damit ist die Kamera 6 nicht unmittelbar unter dem Altreifen 2 angeordnet und vor herabfallendem Schmutz geschützt. Der deutlicheren Darstellung wegen ist die Kamera in der Figur 1 in Transportrichtung angeordnet, tatsächlich ist es aber bevorzugt, die Kamera seitlich anzuordnen, sodass sie auch beim Weitertransport der Reifen nicht überfahren wird. Zusätzlich kann ein Dach gegen herabfallenden Schmutz vorgesehen sein, das in der Figur 1 nicht dargestellt ist. Für den Spiegel 7 ist idealerweise eine automatische Reinigungsvorrichtung vorgesehen, die in der Figur nicht dargestellt ist. Die automatische Reinigungsvorrichtung kann über Druckluft, mittels Hochdruck oder auch Ultraschall den Spiegel 7 reinigen.

Bei der zur Erzeugung der Bilder der Lauffläche sowie der Flanken bevorzugten Verwendung der Lasertriangulation wird auch die Kamera 6 direkt auf die Flanke des Altreifens 2 gerichtet. Hierzu ist sie wie in der Figur 1 gestrichelt dargestellt unmittelbar unter dem Altreifen 2 angeordnet.

Um den Altreifen 2 in eine definierte Position relativ zu den drei Kameras 4, 5 und 6 zu bringen, ist eine Zentriervorrichtung vorgesehen. Die Zentriervorrichtung ist im dargestellten Ausführungsbeispiel aus drei Positionierelementen 13, 14 und 15 gebildet. Die drei Positionierelemente 13, 14 und 15 greifen an unterschiedlichen Stellen am Umfang des Altreifens 2 an und lassen sich hinsichtlich ihres Abstands durch zueinander Verschieben, angetrieben beispielsweise durch Linearantriebe. Damit kann ein Zentrieren und Klemmen des Altreifens 2 erfolgen. Bei der Verwendung von Linearantrieben zur gegengleichen Bewegung der gegenüberliegenden Positionierelemente 13,14 und 15 lässt sich in einfacher Weise ein gewünschter Abstand zwischen den gegenüberliegenden Positionierelementen 14 und 13, 15 anfahren. Entsprechend einem zunächst während des Transports des Altreifens 2 ermittelten Durchmesser des Reifens kann daher bei Erreichen der korrekten Position in Transportrichtung zur Durchführung der Messung der (nicht dargestellte) Linearantrieb zum Zentrieren und Klemmen betätigt werden. Es werden dann die Rollen 13, 14 und 15 auf eine vorgegebene Position, die entsprechend des Durchmessers des Altreifens 2 gewählt ist, gefahren. Der Abstand der Positionierelemente 13, 14 und 15 ist dabei so gewählt, dass eine leichte Klemmung des Reifens erfolgt, um einen sicheren Antrieb zu ermöglichen. Der gewählte Abstand zwischen den gegenüberliegenden Positionierelementen 13, 14 und 15 kann dabei zum Beispiel in einer Tabelle eines Speichers abgelegt sein, der mit der Steuervorrichtung 18 verbunden ist. In dieser Tabelle ist jedem ermittelten Reifendurchmesser ein Abstandswert bzw. Zielwert für den Linearantrieb zugeordnet, der zum Erzeugen der Klemmkraft geringfügig kleiner ist als der ermittelte Durchmesser des Altreifens 2.

Die Geschwindigkeit, mit der ein Altreifen 2 in den Messraum transportiert wird, ist bekannt. In einfacher Weise lässt sich daher aus der Zeit, für die beim Zuführen des Altreifens 2 die unterste Lichtschranke des Lichtschrankensystems 19 unterbrochen ist, der Durchmesser des Altreifens 2 ermitteln. Eine solche Ermittlung des Durchmessers erfolgt damit für jeden dem Messraum zugeführten Altreifen 2 einzeln. Der ermittelte Durchmesser wird auch dazu verwendet, die Zeit zu ermitteln, die der zugeführte Altreifen 2 noch weitertransportiert werden muss, bis er an seiner Messposition in Transportrichtung angekommen ist. Dort erfolgt dann das Zentrieren und Klemmen in bereits beschriebene Weise wiederum unter Berücksichtigung des Durchmessers.

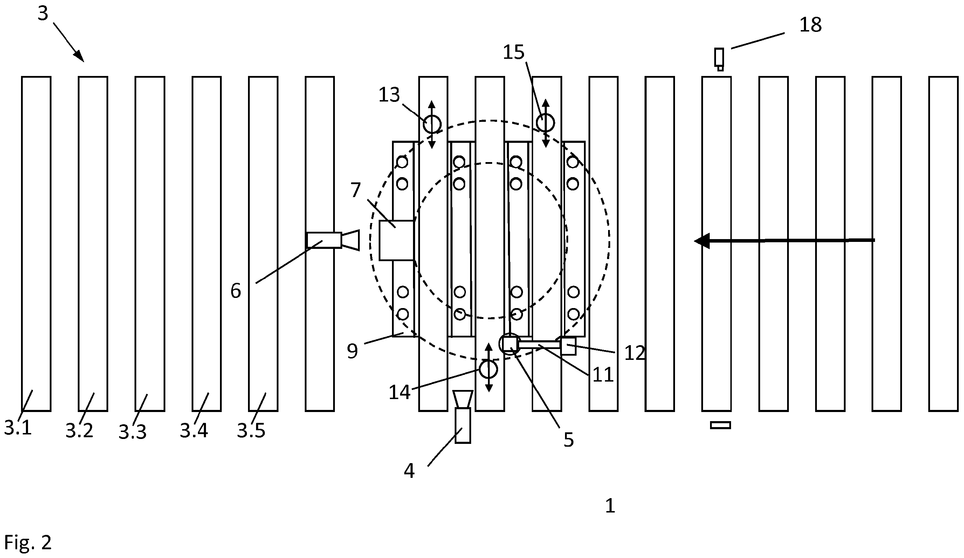

Wie nachstehen unter Bezugnahme auf die Figur 2 noch einmal erläutert wird, ist die Bewegung der Positionierelemente 13, 14 und 15 während des Zentriervorgangs des Altreifens 2 gegenläufig, sodass zum Einen der Mittelpunkt des Altreifens 2 immer an etwa derselben Stelle ist, zum Anderen dieses Zentrieren durch zwei gleichzeitige, gegenläufige Zentrierbewegungen die halbe Zeit benötigt. Um nicht nur einen bestimmten Punkt der Lauffläche des Altreifens 2 erfassen zu können, wird der Altreifen 2 in der Zentriervorrichtung gedreht. Wenigstens eine der in Form von Rollen ausgebildeten Positionierelemente 13, 14 oder 15 ist hierzu angetrieben. Durch die angetriebene Rolle wird der Altreifen 2 zwischen den Positionierelementen 13, 14 und 15 gedreht, bis wenigstens eine vollständige Umdrehung erreicht ist. Mit den Kameras 4, 5 und 6 werden somit Bilddaten erzeugt, die beide Flanken sowie die Lauffläche vollständig in Form von Höhenprofilen abbilden. Insbesondere kann es vorgesehen sein, mehr als eine Umdrehung des Altreifens 2 zu erzeugen, um durch die redundante Erzeugung der Bilddaten eine höhere Erkennungssicherheit zu gewährleisten.

Um den zunächst durch die Transportwalzen zugeführten Altreifen 2 leichter drehen zu können ist eine Hebevorrichtung 8 vorgesehen. Die Hebevorrichtung 8 ist so ausgebildet, dass mit ihr der Altreifen 2 von den Transportrollen der Transportvorrichtung 3 abgehoben werden kann. Ein Anheben des Altreifens 2 um wenige Millimeter von den Transportwalzen ist dabei ausreichend. Die Hebevorrichtung 8 umfasst dabei mehrere Segmente, die zwischen den Transportwalzen hindurch nach oben bewegt werden können, so dass der Altreifen 2 auf ihnen zu liegen kommt. Diese Segmente sind hierzu an einer Hubvorrichtung 10 befestigt, , z.B. einem Hydraulik- oder Pneumatikzylinder. Bevorzugt ist es, wenn der mittels der Hebevorrichtung 8 angehobene Altreifen 2 in angehobenem Zustand durch die Positionierelemente 13, 14 und 15 geklemmt wird und die Hebevorrichtung 8 dann wieder abgesenkt wird. Der Reifen "schwebt" damit geringfügig oberhalb der Transportwalzen und auch oberhalb der Hebevorrichtung 8. Nach der Durchführung der Messung, also beendeter Drehung, wird dann die Hebevorrichtung 8 erneut angehoben, die Positionierelemente 13, 14 und 15 geben durch Betätigung des Linearantriebs den Altreifen 2 wieder frei, und durch Absenken der Hebevorrichtung 8 wird der Altreifen 2 wieder auf der Transportvorrichtung 3 abgelegt. Durch das Ablegen des Altreifens 2 ist auch der Zeitpunkt bekannt, zu dem ein Weitertransport des Altreifens 2 erfolgt. Damit kann das Ablegen des Altreifens 2 auf der Transportvorrichtung 3 auch das erneute Betätigen der Aktuatoren für die Stopperklappe 20 und den Dorn 21 auslösen, sodass gleichzeitig mit dem Weitertransport des Altreifens 2 aus dem Messraum heraus dass Zuführen des nächsten Altreifens in den Messraum erfolgt.

Alternativ kann auch, wie es in der Figur 1 dargestellt ist, eine Kugelplatte 9 mit dem Hubantrieb 10 verbunden sein, um die Hebevorrichtung 8 zu bilden. Nachdem der Altreifen 2 mit Hilfe der Transportvorrichtung 3 in den Bereich des optischen Erfassungssystems gebracht wurde, wird dann der Hubantrieb 10 betätigt und der Reifen durch die Kugelplatte 9 von den Transportwalzen 3.1, 3.2, 3.3,... der Transportvorrichtung 3 abgehoben, wobei der Altreifen 2 aber auf der Kugelplatte 9 liegen bleibt. Durch die Kugelplatte 9 kann nun der Altreifen 2 leicht durch die Antriebsvorrichtung gedreht werden, ohne dass der Hubantrieb 10 zum Freigeben des Reifens erneut betätigt werden muss. In diesem Fall ist eine kleinere Klemmkraft erforderlich, da der Altreifen 2 nicht in der Schwebe gehalten werden muss.

Im dargestellten Ausführungsbeispiel bildet die Zentriervorrichtung gleichzeitig die Antriebsvorrichtung aus. Nachdem die Zentrierung durch die Positionierelemente 13, 14 und 15 erfolgt ist, wird eine relative Drehung zwischen dem Altreifen 2 und dem optischen Erfassungssystem durch wenigstens eines der Positionierelemente 13, 14 und 15, z.B. das Positionierelement 14, das als angetriebene Rolle ausgebildet ist, erreicht. Die übrigen Positionierelemente 13, 15 können frei drehbar sein oder aber ebenfalls als angetriebene Rollen ausgebildet sein.

Das gesamte optische Erfassungssystem, die Hebevorrichtung 8, die Stopperklappe 20 samt zugehörigem Aktuator und das Lichtschrankensystem sind in dem Messraum angeordnet, welcher durch ein Gehäuse 16 umschlossen wird. In diesem Gehäuse 16 sind in zwei seiner gegenüberliegenden Wände Öffnungen angeordnet, sodass mit Hilfe der Transportvorrichtung 3 der Altreifen 2 in den Messraum hinein und nach erfolgter optischer Erfassung aus dem Messraum abtransportiert werden kann. Im Eingangsbereich des Messraums ist, wie oben bereits kurz beschrieben, das Lichtschrankensystem 19 angeordnet. Mit Hilfe des Lichtschrankensystems 19, das im dargestellten Ausführungsbeispiel durch drei übereinander angeordnete Lichtschranken gebildet wird, ist eine ungefähre Erkennung der Höhe des ankommenden Reifens möglich, d. h. unterschiedliche Gruppen von Reifenbreiten erkennbar. Diese Höhe, bzw. eigentlich die Zugehörigkeit der Breite des liegend transportierten Reifens zu einer dieser Gruppen, wird verwendet, um den Abstand der auf die nach oben gerichtete Flanke des Altreifens 2 gerichtete Kamera 5 von dem Altreifen 2 korrekt einzustellen. Die weitere Kamera 5 ist dazu an einer Haltevorrichtung 11 aufgehängt, welche mit einer Hubachse 12 verbunden ist. Die Haltevorrichtung 11 kann hinsichtlich ihrer Position durch die Hubachse 12 bewegt werden, sodass die Höhe der weiteren Kamera 5 gegenüber der Kugelplatte 9 bzw. dem geklemmten Altreifen 2 einstellbar ist. Damit kann die Kamera 5 immer in einem optimalen Tiefenschärfenbereich betrieben werden, da ihr Abstand zur Flanke des Altreifens 2 eingestellt werden kann. In Abhängigkeit von der gewünschten Präzision, mit der der Abstand der Kamera 5 zur von der Transportvorrichtung 3 abgewandten Flanke des Altreifens 2 eingestellt werden soll, ist die Anzahl der Lichtschranken des Lichtschrankensystems 19 zu variieren. Es hat sich jedoch herausgestellt, dass für die breiten von Pkw Reifen die Verwendung von insgesamt drei Lichtschranken in dem Lichtschrankensystem ausreichend ist. Die Einstellung der Kamera 5 erfolgt damit in drei Höhen über der Ebene der Transportvorrichtung 3. Wird lediglich die unterste der drei Lichtschranken ausgelöst, so fährt die Kamera 5 in eine unterste Messposition. Wird dagegen die zweite, mittlere Lichtschranke des Lichtschrankensystems 19 ebenfalls ausgelöst, so wird die Kamera 5 in eine zweite Messposition gebracht. Bei Auslösen aller drei Lichtschranken wird die Kamera 5 in eine oberste Messposition gebracht.

Die Hubachse 12 ist dabei aus zwei seriell zusammenwirkenden Hubzylindern, vorzugsweise pneumatisch betätigt, aufgebaut. Die Hubzylinder können in zwei Richtungen mit Druck beaufschlagt werden, sodass sie entweder in ihre vollständig eingefahrene Position oder in eine vollständig ausgefahrene Position gebracht werden. Das Umschalten erfolgt mit Hilfe eines Schaltventils. In der Grundstellung ist die Kamera 5 in ihrer obersten Position, in der beide Hubzylinder vollständig ausgefahren sind. Werden alle drei Lichtschranken des Lichtschrankensystems 19 beim Zuführen des Reifens ausgelöst, so verbleibt die Kamera 5 in dieser Position. Werden dagegen beim Zuführen des Altreifens 2 lediglich die unterste und die mittlere Schranke ausgelöst, so wird einer der beiden Hubzylinder in seine vollständig eingefahrene Position gebracht, d. h. auf seine minimale Länge gebracht. Dementsprechend wird bei Auslösen lediglich der untersten Lichtschranke des Lichtschrankensystems 19 sowohl der erste als auch der zweite Hubzylinder der Hubachse 12 auf ihre minimale Länge gebracht.

Aufgrund dieser Anordnung werden die beiden Hubzylinder jeweils nur zwischen ihrer minimalen Länge und maximalen Länge umgeschaltet. Für die oberste Position der Kamera 6 addieren sich die beiden maximalen Längen der beiden Zylinder, während sich zum Einstellen der mittleren Position der Kamera 6 lediglich eine minimale Länge eines der Zylinder sowie eine maximale Länge des zweiten Zylinders addieren. Zum Einnehmen der niedrigsten Position der Kamera 6 werden dagegen die beiden minimalen Längen der Zylinder addiert. Da die beiden Zylinder nur zwischen ihren Endlagen betätigt werden, kann eine aufwändige Steuerung entfallen. Die Ansteuerung der beiden Zylinder wird ebenfalls durch die Steuervorrichtung 18 vorgenommen, die hierzu die von den Lichtschranken des Lichtschrankensystems 19 erhaltenen Signale auswertet. Die maximale Längenänderung, die ein einzelner der beiden Zylinder der Hubachse 12 ausführen kann, ist zum Beispiel 80 mm, was dem Abstand zweier benachbarter Lichtschranken des Lichtschrankensystems 19 entspricht. Um auch im Falle des Ausfalls der Pneumatik die Kamera 5 vor einem einfahrenden Altreifen 2 zu schützen, ist eine Vorspannkraft vorgesehen, die die Hubachse 12 in Richtung ihrer höchsten Endposition beaufschlagt. Diese Vorspannkraft kann mittels einer konventionellen Feder (Spiralfeder), einer Gasfeder oder in sonstiger Weise erzeugt werden.

Zu bemerken ist, dass im dargestellten Ausführungsbeispiel die Transportwalzen 3.2, 3.2, 3.3, ... der Transportvorrichtung 3 einen im Wesentlichen konstanten Abstand haben. Lediglich eine Transportwalze ist im gezeigten Beispiel ausgelassen, um dem Spiegel 7 den optischen Weg zur der der Transportvorrichtung 3 zugewandten Flanke des Reifens freizuhalten. Im bevorzugten Fall, dass eine Lasertriangulation durchgeführt wird und daher die dritte Kamera 6 unterhalb der Transportvorrichtung 3 angeordnet ist, ist an der entsprechenden Stelle direkt die Kamera 6 angeordnet.

In der Figur 1 ist eine Recheneinheit 17 gezeigt, die von allen drei Kameras die Bilddaten erhält. Mit Hilfe der Recheneinheit 17 wird eine Bildverarbeitung durchgeführt. In dieser Bildverarbeitung wird die Lauffläche auf Basis der von der Kamera 4 erzeugten Bilddaten hinsichtlich der darin enthaltenen Höheninformationen analysiert und eine Bewertung der Abnutzung der Lauffläche durchgeführt. Hierzu können mehrere Kategorien vorgesehen sein, beispielsweise "symmetrische Abnutzung der Lauffläche", "schräge Abnutzung der Lauffläche", unterschiedliche Profiltiefenbereiche, usw. Wie es oben bereits erläutert wurde, wird vorzugsweise ein Höhenprofil der mit den Kameras 4, 5 und 6 aufgenommenen Flächen des Altreifens 2 erzeugt. Damit wird ein Abbild der reliefartigen Strukturen auf den Flanken des Altreifens 2 aber auch der unterschiedlichen Höhen des Profils auf der Lauffläche erzeugt. Dieses Abbild, bzw. Teile daraus, wird dann mit in einer Datenbank, auf die die Recheneinheit 17 Zugriff hat, gespeicherten Mustern verglichen. In der Datenbank sind möglichst sämtliche möglicherweise auftretenden Muster abgespeichert. Solche Muster können zum Beispiel unterschiedliche Reifendimensionen in verschiedenen Schriftarten, Firmenlogos, Firmenschriftzüge usw. enthalten. In jedem Fall enthält sie jedenfalls sämtliche auftretenden Muster, in denen das Produktionsdatum auf der Flanke des Altreifens 2 erscheinen kann. Die Ermittlung der Profiltiefe bzw. der Verteilung von Profiltiefen über den Umfang und die Reifenbreite kann dagegen direkt aus den Höheninformationen des Höhenprofils erfolgen.

Um aus den von der Lauffläche und den Flanken ermittelten Höhenprofilen auf die weitere Nutzbarkeit des Altreifens 2 schließen zu können, wird zumindest das Produktionsdatum ausgewertet und ein Maß für die Nutzung ermittelt. Zur Bestimmung des Alters wird aus den von der Kamera 5 sowie der Kamera 6 erzeugten Bilddaten das Produktionsdatum aus der DOT-Nummer und damit letztlich das Alter des Altreifens 2 ermittelt. Zudem wird vorzugsweise die auf den Flanken des Altreifens 2 angegebenen Dimension des Reifens ermittelt. Aus den so gewonnenen Daten wird ein Datensatz erzeugt, der zu jedem der Altreifen 2, der der erfindungsgemäßen Vorrichtung 1 zugeführt wird, erzeugt und ggf. für eine weitere, zum Beispiel statistische Auswertung abgespeichert. Auf Basis der so gewonnenen Daten wird eine Information erzeugt, z.B. in Form eines Steuersignals, die der weiteren Verarbeitung des Altreifens 2 zu Grunde gelegt wird. Im einfachsten Fall kann beispielsweise unterschieden werden zwischen den Kategorien "brauchbar" und "unbrauchbar". "Unbrauchbar" kann beispielsweise dann erkannt werden, wenn auf Basis des Produktionsdatums ein zu hohes Alter des Reifens erkannt wird. Andererseits können auch Beschädigungen, die bei der Analyse der Bilddaten der Lauffläche gewonnen werden, zu einem solchen Ausschluss führen, aber auch zu geringe Restprofiltiefe, ungleichmäßige Abnutzung, Beschädigungen usw. Die als "brauchbar" eingestuften Reifen können selbstverständlich weiteren Unterkategorien zugeordnet werden. Beispielsweise sind unterschiedliche Profiltiefenbereiche denkbar, sodass in unterschiedliche zu erwartende Laufleistungen kategorisiert werden kann aber auch eine Sortierung nach Hersteller, Reifentyp, usw. ist möglich.

Die Zuordnung zu den Kategorien "brauchbar" und "unbrauchbar" erfolgt auf Basis der DOT-Nummer in Kombination mit einem Maß für den Nutzungsgrad. Das Maß für den Nutzungsgrad ist damit eine Kenngröße für den Verschleiß des Altreifens 2, wobei der Verschleiß sowohl eine normale Abnutzung als auch eventuell vorhandene Beschädigungen umfasst. Zusätzlich zur DOT-Nummer wird also ein Maß für den Nutzungsgrad des Altreifens ermittelt, der sich aus mehreren Einzelwerten (einzelnen Kennwerten) zusammensetzen kann. Für unterschiedliche Aspekte können so individuelle Einzelwerte ermittelt werden, die im Anschluss zu einem kombinierten Maß für den Nutzungsgrad zum Beispiel summiert werden. Diese einzelnen Aspekte zusätzlich zum Alter des Reifens können sein: Restprofil, Anzahl der Beschädigungen, Tiefe und/oder Fläche von Beschädigungen an der Flanke, Varianz von Profiltiefen entlang des Umfangs und/oder über die Laufflächenbreite. Beispielsweise, kann der ermittelten Restprofiltiefe ein den Nutzungsgrad kennzeichnender einzelner Kennwert zugewiesen werden. So kann einer aus mehreren Messposition, die über den Umfang des Reifens verteilt sind, ermittelten, mittleren Profiltiefe ein einzelner Kennwert zugeordnet werden, der zum Beispiel 0 für eine minimale Profiltiefe und 10 für eine restliche Profiltiefe ist, die praktisch dem Neuzustand eines Reifens entspricht. Die minimale Profiltiefe kann dabei durch den jeweiligen Betreiber der Vorrichtung festgelegt werden und gegebenenfalls auch für unterschiedliche Reifentypen individuell vergeben werden. So können die Anforderungen an einen Winterreifen hinsichtlich einer Restprofiltiefe größer sein als an einen Sommerreifen.

Durch Mustervergleich mit in der Datenbank abgespeicherten prototypischen Beschädigungen können auch Beschädigungen unterschiedlicher Tiefe und Fläche mit entsprechenden einzelnen Kennwerten, die beispielsweise umso größer sind, je tiefer und/oder großflächiger eine Beschädigung ist. Die für die einzelnen Aspekte ermittelten einzelnen Kennwerte werden schlussendlich zur Bildung eines Maßes für den Nutzungsgrad kombiniert, im einfachsten Fall summiert. Durch Vergleich des Maßes für den Nutzungsgrad mit einer Bedingung, die die Grenze zwischen "brauchbar" und "unbrauchbar" festlegt, wird dann Zuordnung des Reifens zur jeweiligen Kategorie vorgenommen. Diese Bedingung wird in einem Speicher der Recheneinheit 17 abgespeichert. Im einfachen Fall einer Summierung der einzelnen Kennwerte reicht hierzu die Definition eines Grenzwerts. Überschreitet dieses Maß diesen vordefinierten Grenzwert, so wird der Reifen als "unbrauchbar" klassifiziert. Bleibt das Maß dagegen unterhalb des Grenzwerts, so wird der Reifen zunächst in die Kategorie "brauchbar" eingestuft. Dieser Grenzwert, oder allgemeiner die Vergleichsbedingung, bestehend zum Beispiel aus einer oder mehreren Kombinationen von Grenzwerten für die einzelnen Kennwerte, kann vorzugsweise durch den Betreiber der Vorrichtung festgelegt werden. Bevorzugt wird lediglich in dem Fall, dass ein Altreifen 2 der Kategorie "brauchbar" zugeordnet wird, eine weitere Analyse von Informationen der Flanke vorgenommen, um zum Beispiel eine Sortierung der Altreifen 2 nach Hersteller, Dimension, Modell, Sommerreifen/Winterreifen, usw. vorzunehmen, also jeden der als "brauchbar" eingestuften Altreifen 2 einer Unterkategorie der Kategorie "brauchbar" zuzuordnen.

Die Recheneinheit 17 ist ein Bildverarbeitungssystem mit einem Rechner, auf dem eine Software zur Durchführung des oben beschriebenen Mustervergleichs ausgeführt wird, wobei der Rechner eine Speichereinheit u.a. zum Speichern der Datenbank, einen Prozessor sowie unterschiedliche Schnittstellen aufweist. Die Schnittstellen dienen insbesondere auch der Verbindung zur der Steuervorrichtung 18.

Die Steuervorrichtung 18 dient im Wesentlichen dazu, den Zeitablauf der gesamten Anlage zu steuern, wozu sie insbesondere die weiter oben bereits beschriebene Ansteuerung der Hebevorrichtung 8, der Rückhaltevorrichtung, der Transportvorrichtung 3 und der Hubachse 12 übernimmt. Hierzu ist die Steuervorrichtung 18 mit den motorischen Antrieben der Transportwalzen 3.1, 3.2, 3.3, ..., des Hubantriebs 10 sowie einem Antrieb der Hubachse 12 verbunden. Im einfachsten Fall wird durch die Transportvorrichtung 3 ein kontinuierlicher Transport von Altreifen 2 durchgeführt. Das erforderliche Anhalten der Altreifen 2, 2', 2" wird dann einerseits durch die bereits beschriebene Rückhaltevorrichtung, bestehend aus der Stopperklappe 20 sowie dem Dorn 21, und andererseits durch das Anheben des gerade optisch zu erfassenden Altreifens 2 durchgeführt. Die erreichten Taktzeiten liegen bei der bevorzugten Ausführung mit nur 1 Umdrehung des Altreifens 2 bei 10 Sekunden oder noch darunter.

Es ist jedoch auch denkbar, dass die Zuführung von Altreifen (sowie der Abtransport) mittels der Transportvorrichtung 3 getaktet erfolgt. In diesem Fall wird ein Transport durch die Transportvorrichtung 3 nur dann durchgeführt, wenn der Messraum einen neuen Altreifen 2 aufnehmen kann. Das bedeutet, dass durch die Steuervorrichtung 18 zunächst von der Hebevorrichtung 8 der Altreifen 2, dessen optische Erfassung abgeschlossen ist, wieder auf die Transportvorrichtung 3 abgelegt wird. Sodann wird der gerade vermessene Altreifen 2 abtransportiert und gleichzeitig durch in Gang setzen der Transportvorrichtung 3 der nächste Reifen 2' zugeführt. Befindet sich der nächste Altreifen 2' dann in dem Messraum zwischen den Positionierelementen 13, 14 und 15 der Zentriervorrichtung, so wird die Transportvorrichtung 3 angehalten, die Hebevorrichtung 8 betätigt und es erfolgt eine Vermessung des nun zugeführten weiteren Altreifens ,. Nachteilig an einer solchen Lösung ist es, dass die Altreifen 2, 2', 2" bereits mit einem Abstand auf der Transportvorrichtung 3 angeordnet sein müssen, sodass sich lediglich ein Reifen jeweils in dem Messraum befindet.

In der Figur 2 ist eine Draufsicht auf einen Teil der Anlage gezeigt, wobei der zugeführte Altreifen 2 durch die Positionierelemente 13, 14 und 15 bereits positioniert wurde. In dieser Position wird durch eine der anliegenden Rollen 13, 14 oder 15 eine Rotation des Altreifens 2 bewirkt, sodass in der nun in der Draufsicht gut zu erkennenden, seitlich angeordneten Kamera 4 eine optische Erfassung der gesamten Lauffläche erzeugt werden kann. Im rechten Teil ist bei der Transportvorrichtung 3 wiederum die Transportrichtung durch den Pfeil angegeben. Ebenso ist der den Lichtschrankenelementen, die in der Figur 1 bereits zu erkennen waren, gegenüberliegende Spiegel nun in der Figur 2 erkennbar.

Die Kugelplatte 9 weist bei dem in der Figur 2 gezeigten Ausführungsbeispiel insgesamt sechzehn als Kreise erkennbare Kugeln auf. Selbstverständlich ist die Anordnung der Kugeln der Kugelplatte 9 lediglich beispielhaft zu verstehen, um das Prinzip zu verdeutlichen. Im Bereich des Spiegels ist die Kugelplatte 9 gegebenenfalls ausgeschnitten, sodass sie nicht im optischen Weg zwischen der der Transportvorrichtung 3 zugewandten Flanke des Altreifens 2 und dem Spiegel angeordnet ist. Alternativ kann der Spiegel auch als eine schräge Fläche der Kugelplatte 9 ausgebildet sein. In der Figur 2 ist der Spiegel mittig in Bezug auf die Symmetrie der Vorrichtung angeordnet. Dies dient der besseren Erkennbarkeit der einzelnen Elemente insbesondere der Kugeln der Kugelplatte 9. In der Praxis ist es jedoch bevorzugt, wenn der Spiegel 7 im Bereich eines Positionierelements angeordnet ist, da hier die Position der Reifenflanke immer etwa konstant ist, unabhängig von der Größe des Reifens.

Wie es oben bereits erläutert wurde, ist es allerdings bevorzugt, wenn anstelle der Kugelplatte 9 lediglich mindestens zwei Segmente mit dem Hubantrieb 10 gekoppelt sind, so dass der Hubantrieb 10 die Segmente zwischen den Transportrollen der Transportvorrichtung 3 hindurch anheben kann. Die Hubvorrichtung 10 wird so angesteuert wird, dass sie nach dem Klemmen des Altreifens 2 durch die Positionierelemente 13, 14 und 15 wieder ein Stück weit abgesenkt wird.

In dem dargestellten Ausführungsbeispiel sind lediglich drei Positionierelemente 13, 14 und 15 vorgesehen, um bei der Seitenansicht der Figur 1 zu verhindern, dass die Positionierelemente hintereinander zu liegen kommen. Es ist jedoch bevorzugt, wenn insgesamt vier solcher Positionierelemente vorgesehen sind. Anstelle des einzelnen Positionierelements 14 auf der Seite der Kamera 4 wären dann zwei Positionierelemente angeordnet, die symmetrisch zur Transportrichtung den Positionierelementen 13 und 15 gegenüberliegen. Diese sich gegenüberüberliegenden Positionierelemente können dann mit einer gegenläufigen Bewegung senkrecht zur Transportrichtung verfahren werden, um den Altreifen 2 vor der optischen Erfassung in Position zu bringen. Im Gegensatz zu der gezeigten Anordnung mit lediglich drei Positionierelementen 13, 14, 15 ist der Verfahrweg der Positionierelemente dann gleich lang.

Für die Praxis ist es jedoch vollkommen ausreichend, auch bei der Verwendung von den gezeigten drei Positionierelementen 13, 14 und 15 gleich lange Bewegungswege vorzusehen. Die Verfahrwege der Positionierelemente 13, 14 und 15 werden dabei aus dem wie oben angegeben bestimmten Durchmesser des Altreifens 2 ermittelt. Es ist ersichtlich, dass aufgrund des Abstands der beiden Positionierelemente 13 und 15 die Verfahrwege nicht exakt mit den ermittelten Durchmessern des Altreifens korrelieren, sondern in Abhängigkeit vom ermittelten Durchmesser zu bestimmen sind. Hierzu kann im Speicher, auf den die Steuervorrichtung 18 Zugriff hat eine entsprechende Tabelle abgelegt sein, die zumindest mehreren unterschiedlichen Durchmessern anzufahrende Positionen für die Positionierelemente 13, 14 und 15 zuordnet. Zwischenwerte können interpoliert werden.

Zwar ist bei der Verwendung von drei Positionselementen 13, 14 und 15 die Rotationsachse in Abhängigkeit von dem Durchmesser des Reifens bei gleich langen Verfahrwegen der Positionierelemente 13 und 15 sowie 14 nicht immer an derselben Stelle, zur Auswertung spielt dies jedoch keine Rolle. Der besseren Übersichtlichkeit wegen waren die Kameras und die beiden frei laufenden Rollen der Positionierelemente 13 und 15 auf gegenüberliegenden Seiten angeordnet. Tatsächlich ist es jedoch bevorzugt, wenn alle drei Kameras 4, 5 und 6 ortsfest (bis auf die Höhenverstellbarkeit der Kamera 5) zu dem in Drehrichtung des Altreifens 2 befindlichen Positionselement angeordnet sind. Dreht sich der Altreifen 2 also in der Figur 2 im Uhrzeigersinn, so wäre dies das Positionselement 15. Die Kameras 4, 5 und 6 sind dabei so angeordnet, dass sie eine Oberfläche des Altreifens 2 in unmittelbarer Nähe des Positionselements 15 abtasten. Damit wird der Einfluss der vom Durchmesser abhängigen Lage des Zentrums des Altreifens 2 deutlich verringert. Die jeweils abgetastete Stelle der Oberfläche des Altreifens 2 hat dabei bereits das Positionselement 13 aber auch das Positionierelement 15 passiert. Unabhängig von einer eventuellen Änderung der Lage der Rotationsachse des Altreifens 2 ist so der Abstand zwischen der jeweiligen Kamera 4, 5 und 6 zu der zu messenden Oberfläche praktisch konstant und durch die Anlage an den Positionierelementen und die leichte Klemmung des Altreifens 2 wird dabei bereits ein Teil einer eventuell vorhandenen Verschmutzung gelöst, wodurch die Genauigkeit der Abbildung und damit letztlich die Messgenauigkeit erhöht wird. Da bei einer Drehung des Altreifens 2 Verschmutzungen auch spritzen können, ist zwischen dem Positionierelement, welches am nächsten zu den Kameras 4, 5 und 6 angeordnet ist, ein Abschirmblech vorgesehen.

In jedem Fall ist eine Verschiebung der Positionierelemente 13, 14 und 15 zur Zentrierung des Altreifens senkrecht zur Transportrichtung sowie parallel zur Transportebene, die durch die Transportwalzen 3.1, 3.2, 3.3, ... gebildet wird. Alternativ zu einer Bewegung senkrecht zur Transportrichtung der Altreifen 2, 2', 2" kann ein Antrieb der Positionierelemente 13, 14 und 15 so ausgebildet sein, dass eine Verschiebung der Positionierelemente 13, 14 und 15 zentrisch zu einer Rotationsachse des Altreifens 2 erfolgt. Damit befindet sich unabhängig von einem Durchmesser des Altreifens 2 die Symmetrieachse des Altreifens 2 immer an derselben Position.

Mit dem dargestellten automatischen Bewertungssystem bzw. der automatisierten Alters- und/oder Zustandserkennung von Altreifen mit anschließender Kategorisierung der Altreifen zu wenigstens einer von mehreren Kategorien lässt sich eine Taktzeit von wenigen Sekunden erreichen. Die Vereinzelung der Altreifen aus einem Container ist in den Figuren nicht dargestellt und kann in an sich bekannter Weise erfolgen. Hierzu ist einerseits Personal einsetzbar, andererseits können auch Vereinzeler, Steigförderer o.ä. ggf. vorhandene Einrichtungen eingesetzt werden, solange sichergestellt ist, dass ein liegender Transport auf der Transportvorrichtung 3 erreicht wird. Nach dem Durchlaufen des Messraums wird dann eine Sortierung durchgeführt, bei der die Daten, die auf Basis der optischen Erfassung der Altreifen 2 erhalten werden, zur Steuerung herangezogen werden.

Um sicherzustellen, dass die Lauffläche des Altreifens 2 immer im Fokus der Kamera 4 liegt, ist die Kamera 4 vorzugsweise ortsfest relativ zu dem Positionierelement 14 bzw. einem der beiden auf dieser Seite angeordneten Positionierelemente angeordnet. Damit wird sichergestellt, dass auch bei unterschiedlichen Reifengrößen, die in der Anlage verarbeitet werden können, der Abstand der Kamera 4 von der Lauffläche immer etwa konstant ist. Ebenso ist die Hubachse 12, an dem die Haltevorrichtung 11 der weiteren Kamera 5 angeordnet ist vorzugsweise ortsfest zu dem Positionierelement 14 angeordnet. Lediglich im Falle der separaten Kamera 6 ist sicherzustellen, dass der Spiegel 7 groß genug ist.

## Patentansprüche

1. Vorrichtung zur Zustandserfassung von Altreifen, umfassend:
eine Transportvorrichtung (3) zum Transport von vereinzelten Altreifen (2),
ein optisches Erfassungssystem (4, 5, 6) mit einer Vorrichtung zur optischen Erfassung einer Lauffläche des Altreifens (2) und beider Flanken,
einer Antriebsvorrichtung (13, 14, 15) zur Erzeugung einer Drehung des Altreifens (2) relativ zu dem optischen Erfassungssystem (4, 5, 6),
**dadurch gekennzeichnet,**
**dass** die Vorrichtung zusätzlich die folgenden Merkmale aufweist:
eine mit dem optischen Erfassungssystem (4, 5, 6) verbundene Recheneinheit (17) zur Durchführung einer Bildverarbeitung basierend auf von dem optischen Erfassungssystem (13, 14, 15) erzeugten Bilddaten und zur Zuordnung des optisch erfassten Altreifens (2) zu einer von wenigstens zwei Kategorien basierend auf dem ermittelten Zustand des Altreifens, wobei die Recheneinheit (17) eingerichtet ist, zur Ermittlung des Zustands des Altreifens (2) auf Basis der von den Flanken erfassten Bilddaten wenigstens ein Produktionsdatum zu ermitteln und auf Basis der von der Lauffläche erzeugten Bilddaten ein Maß für einen Nutzungszustand zu ermitteln, wobei zu jeder möglichen Kombination eines Reifenalters mit dem ermittelten Maß für den Nutzungszustand eine der wenigstens zwei Kategorien festgelegt ist.

2. Vorrichtung nach Anspruch 1,
**dadurch gekennzeichnet,**
**dass** die optische Erfassungseinheit (4, 5, 6) in einem Messraum angeordnet ist, der die Transportvorrichtung (3) umgibt und in dessen Wänden Öffnungen zum Zuführen und zum Abtransport des Altreifens (2) angeordnet sind.

3. Vorrichtung nach einem der Ansprüche 1 oder 2,
**dadurch gekennzeichnet,**
**dass** das optische Erfassungssystem (4, 5, 6) wenigstens eine auf die Lauffläche gerichtete Kamera (4) und zwei weitere Kameras (5) aufweist, die auf jeweils eine Flanke des Altreifens (2) gerichtet sind.

4. Vorrichtung nach Anspruch 3,
**dadurch gekennzeichnet,**
**dass** eine Position einer der weiteren Kameras (5) zur Einstellung ihres Abstands zu der von dieser Kamera (5) erfassten Flanke des Altreifens (2) einstellbar ist.

5. Vorrichtung nach Anspruch 3 oder 4,
**dadurch gekennzeichnet,**
**dass** eine Aufhängung der weiteren Kamera (6) über eine Einrichtung verfügt, die einer Gewichtskraft der Kamera (6) entgegenwirkt und zumindest bei Systemabschaltung eine Verringerung des Abstands der Kamera (6) von der Flanke verhindert oder diesen vergrößert.

6. Vorrichtung nach Anspruche 4 oder 5,
**dadurch gekennzeichnet,**
**dass** zur Erkennung einer Altreifenbreite ein Lichtschrankensystem (19) im Transportweg des Altreifens (2) angeordnet ist und eine Einstellung der Position auf Basis der erkannten Breite erfolgt.

7. Vorrichtung nach einem der Ansprüche 1 bis 6,
**dadurch gekennzeichnet,**
**dass** die Transportvorrichtung (3) zum liegenden Transport der Altreifen (2) eingerichtet ist, insbesondere, dass die Transportvorrichtung (3) hierzu eine Folge von angetriebenen Transportwalzen (3.1, 3.2, 3.3, 3.4, 3.5) aufweist.

8. Vorrichtung nach einem der Ansprüche 1 bis 7,
**dadurch gekennzeichnet,**
**dass** die Vorrichtung eine Zentriervorrichtung (13, 14, 15) zur Zentrierung des zu erfassenden Altreifens (2) aufweist, wobei zur Zentrierung wenigstens drei Positionierelemente (13, 14, 15) vorgesehen sind, deren Abstand zueinander einstellbar (zentrierbar) ist.

9. Vorrichtung nach Anspruch 8,
**dadurch gekennzeichnet,**
**dass** die Zentriervorrichtung (13, 14, 15) durch die Antriebsvorrichtung gebildet wird und zumindest eines der Positionierelemente (13, 14, 15) zur Erzeugung der Drehbewegung eine angetriebene Rolle ist.

10. Vorrichtung nach einem der Ansprüche 8 oder 9,
**dadurch gekennzeichnet,**
**dass** die Positionierelemente (13, 14, 15) zum Zentrieren des Altreifens (2) gegenläufig, parallel zur Transportebene und senkrecht zur Transportrichtung bewegbar sind.

11. Vorrichtung nach einem der Ansprüche 1 bis 10,
**dadurch gekennzeichnet,**
**dass** eine Hebevorrichtung (8) vorgesehen ist, mit der der zugeführte Altreifen (2) von den Transportwalzen (3.1, 3.2, 3.3, 3.4, 3.5) abgehoben werden kann.

12. Vorrichtung nach Anspruch 11,
**dadurch gekennzeichnet,**
**dass** durch eine Steuervorrichtung (18) die Hebevorrichtung (8) so angesteuert wird, dass ein Weitertransport des Altreifens (2) nach dem Anheben zur optischen Erfassung erst nach einer erfolgreichen Erkennung vorgegebener Reifendaten oder nach Überschreiten einer Höchstdauer zur Erfassung erfolgt.

13. Vorrichtung nach Anspruch 11 oder 12,
**dadurch gekennzeichnet,**
**dass** durch die Steuervorrichtung (18) die Hebevorrichtung (8) so angesteuert wird, dass durch die Antriebsvorrichtung (13, 14, 15) vor dem Weitertransport eine Mindestanzahl von vollständigen Altreifendrehungen durchgeführt wird.

14. Vorrichtung nach einem der Ansprüche 1 bis 13,
**dadurch gekennzeichnet,**
**dass** die Recheneinheit (17) eingerichtet ist, zusätzlich wenigstens auf Basis der von der einer Flanke erfassten Bilddaten eine Reifendimension, einen Reifentyp und/oder einen Reifenhersteller zu ermitteln.

15. Vorrichtung nach einem der Ansprüche 1 bis 14,
**dadurch gekennzeichnet,**
**dass** die Recheneinheit (17) mit einem Speicher verbunden ist, in dem für jeden erfassten Altreifen ein Datensatz gespeichert wird, der eine zumindest aus den Bilddaten der Lauffläche Kennzeichnung umfasst.

## Claims

1. Device for detecting the condition of used tyres, comprising:
a transport device (3) for transporting separated used tyres (2),
an optical detection system (4, 5, 6) with a device for optically detecting a tread of the used tyre (2) and both sides,
a drive device (13, 14, 15) for generating a rotation of the used tyre (2) relative to the optical detection system (4, 5, 6),
**characterised in that**
the device additionally has the following features:
a computing unit (17) connected to the optical detection system (4, 5, 6) for carrying out image processing based on image data generated by the optical detection system (13, 14, 15) and for assigning the optically detected used tyre (2) to one of at least two categories based on the determined condition of the used tyre, the computing unit (17) being set up to determine at least a production date on the basis of the image data captured by the sidewalls in order to determine the condition of the used tyre (2) and to determine a measure for a state of use on the basis of the image data generated by the tread, one of the at least two categories being defined for each possible combination of a tyre age with the determined measure for the state of use.

2. Device according to claim 1,
**characterised in that**
the optical detection unit (4, 5, 6) is arranged in a measuring chamber which surrounds the transport device (3) and in the walls of which openings are arranged for feeding and removing the used tyre (2).

3. Device according to one of claims 1 or 2,
**characterised in that**
the optical detection system (4, 5, 6) has at least one camera (4) directed towards the tread and two further cameras (5), each of which is directed towards a sidewall of the used tyre (2).

4. Device according to claim 3,
**characterised in that**
a position of one of the further cameras (5) can be adjusted to set its distance from the edge of the used tyre (2) detected by this camera (5).

5. Device according to claim 3 or 4,
**characterised in that**
a suspension of the further camera (6) has a device which counteracts a weight force of the camera (6) and prevents a reduction in the distance of the camera (6) from the flank or increases this distance at least when the system is switched off.

6. Device according to claim 4 or 5,
**characterised in that**
a light barrier system (19) is arranged in the transport path of the used tyre (2) in order to detect a used tyre width and the position is set on the basis of the detected width.

7. Device according to any one of claims 1 to 6,
**characterised in that**
the transport device (3) is set up for horizontal transport of the used tyres (2), in particular **in that** the transport device (3) has a sequence of driven transport rollers (3.1, 3.2, 3.3, 3.4, 3.5) for this purpose.

8. Device according to any one of claims 1 to 7,
**characterised in that**
the device has a centring device (13, 14, 15) for centring the used tyre (2) to be detected, at least three positioning elements (13, 14, 15) being provided for centring, the distance between which can be adjusted (centred).

9. Device according to claim 8,
**characterised in that**
the centring device (13, 14, 15) is formed by the drive device and at least one of the positioning elements (13, 14, 15) for generating the rotary movement is a driven roller.

10. Device according to one of claims 8 or 9,
**characterised in that**
the positioning elements (13, 14, 15) for centring the used tyre (2) can be moved in opposite directions, parallel to the transport plane and perpendicular to the transport direction.

11. Device according to any one of claims 1 to 10,
**characterised in that**
a lifting device (8) is provided, with which the supplied used tyre (2) can be lifted off the transport rollers (3.1, 3.2, 3.3, 3.4, 3.5).

12. Device according to claim 11,
**characterised in that**
the lifting device (8) is controlled by a control device (18) in such a way that further transport of the used tyre (2) after lifting for optical detection takes place only after successful detection of predetermined tyre data or after a maximum duration for detection has been exceeded.

13. Device according to claim 11 or 12,
**characterised in that**
the control device (18) controls the lifting device (8) in such a way that the drive device (13, 14, 15) performs a minimum number of complete rotations of old tyres before the further transport.

14. Device according to any one of claims 1 to 13,
**characterised in that**
the computing unit (17) is set up to additionally determine a tyre dimension, a tyre type and/or a tyre manufacturer at least on the basis of the image data recorded by the one sidewall.

15. Device according to any one of claims 1 to 14,
**characterised in that**
the computing unit (17) is connected to a memory in which a data record is stored for each old tyre detected, which data record comprises an identification at least from the image data of the tread.

## Revendications

1. Dispositif de détection de l'état de pneus usagés comprenant :
un dispositif de transport (3) pour le transport de pneus usagés (2) séparés,
un système de détection (4, 5, 6) optique avec un dispositif de détection optique d'une surface de roulement du pneu usagé (2) et des deux flancs,
un dispositif d'entraînement (13, 14, 15) pour la génération d'une rotation du pneu usagé (2) par rapport au système de détection (4, 5, 6) optique, **caractérisé en ce que** le dispositif présente en outre les caractéristiques suivantes :
une unité de calcul (17) reliée au système de détection (4, 5, 6) optique pour la réalisation d'un traitement d'image sur la base de données d'image générées par le système de détection (13, 14, 15) optique et pour l'association du pneu usagé (2) détecté optiquement à une des au moins deux catégories se basant sur l'état calculé du pneu usagé, dans lequel l'unité de calcul (17) est conçue afin de déterminer sur la base de données d'image détectées par les flancs pour la détermination de l'état du pneu usagé (2) au moins une date de production et de déterminer sur la base des données d'image générées par la surface de roulement une mesure pour un état d'utilisation, dans lequel une des au moins deux catégories est fixée pour chaque combinaison possible d'un âge de pneu avec la mesure déterminée pour l'état d'utilisation.

2. Dispositif selon la revendication 1,
**caractérisé en ce que**
l'unité de détection optique (4, 5, 6) est agencée dans un espace de mesure qui entoure le dispositif de transport (3) et dans les parois duquel des ouvertures sont agencées pour la fourniture et le transport du pneu usagé (2).

3. Dispositif selon l'une quelconque des revendications 1 ou 2,
**caractérisé en ce que**
le système de détection optique (4, 5, 6) présente au moins une caméra (4) dirigée sur la surface de roulement et deux autres caméras (5) qui sont dirigées respectivement sur un flanc du pneu usagé (2).

4. Dispositif selon la revendication 3,
**caractérisé en ce que**
une position d'une des autres caméras (5) est réglable pour le réglage de sa distance par rapport au flanc détecté par cette caméra (5) du pneu usagé (2).

5. Dispositif selon la revendication 3 ou 4,
**caractérisé en ce que**
une suspension de l'autre caméra (6) dispose d'un dispositif qui agit contre un poids de la caméra (6) et au moins en cas d'arrêt du système, empêche une diminution de la distance de la caméra (6) par rapport au flanc ou augmente celle-ci.

6. Dispositif selon la revendication 4 ou 5,
**caractérisé en ce que**
pour la reconnaissance d'une largeur de pneu usagé, un système de barrière de lumière (19) est agencé dans la course de transport du pneu usagé (2) et un réglage de la position est effectué sur la base de la largeur reconnue.

7. Dispositif selon l'une quelconque des revendications 1 à 6,
**caractérisé en ce que**
le dispositif de transport (3) est conçu pour le transport horizontal des pneus usagés (2), en particulier que le dispositif de transport (3) présente à cet effet une suite de rouleaux de transport (3.1, 3.2, 3.3, 3.4, 3.5) entraînés.

8. Dispositif selon l'une quelconque des revendications 1 à 7,
**caractérisé en ce que**
le dispositif présente un dispositif de centrage (13, 14, 15) pour le centrage du pneu usagé (2) à détecter, dans lequel pour le centrage, au moins trois éléments de positionnement (13, 14, 15) sont prévus, dont la distance les uns par rapport aux autres est réglable (centrable).

9. Dispositif selon la revendication 8,
**caractérisé en ce que**
le dispositif de centrage (13, 14, 15) est formé par le dispositif d'entraînement et au moins un des éléments de positionnement (13, 14, 15) est un rouleau entraîné pour la génération du mouvement de rotation.

10. Dispositif selon l'une quelconque des revendications 8 ou 9,
**caractérisé en ce que**
les éléments de positionnement (13, 14, 15) sont mobiles pour le centrage du pneu usagé (2) en sens inverse, parallèlement au plan de transport et perpendiculairement au sens de transport.

11. Dispositif selon l'une quelconque des revendications 1 à 10,
**caractérisé en ce que**
un dispositif de levage (8) est prévu, avec lequel le pneu usagé (2) fourni peut être levé par les rouleaux de transport (3.1, 3.2, 3.3, 3.4, 3.5).

12. Dispositif selon la revendication 11,
**caractérisé en ce que**
le dispositif de levage (8) est commandé par un dispositif de commande (18) de sorte qu'une suite du transport du pneu usagé (2) soit effectuée après le levage pour la détection optique uniquement après une reconnaissance réussie de données de pneu prédéfinies ou après le dépassement d'une durée maximum pour la détection.

13. Dispositif selon la revendication 11 ou 12,
**caractérisé en ce que**
le dispositif de levage (8) est commandé par le dispositif de commande (18) de sorte qu'un nombre minimum de rotations de pneu usagé complètes soit réalisé par le dispositif d'entraînement (13, 14, 15) avant la suite du transport.

14. Dispositif selon l'une quelconque des revendications 1 à 13,
**caractérisé en ce que**
l'unité de calcul (17) est conçue afin de déterminer en outre au moins sur la base de données d'image détectées par l'un flanc une dimension de pneu, un type de pneu et/ou un fabriquant de pneu.

15. Dispositif selon l'une quelconque des revendications 1 à 14,
**caractérisé en ce que**
l'unité de calcul (17) est reliée à une mémoire, dans laquelle pour chaque pneu usagé détecté, un jeu de données est enregistré, lequel comporte une caractérisation au moins à partir des données d'image de la surface de roulement.
